# EUROPÄISCHE PATENTSCHRIFT

(11) **EP 3 023 485 B1**
(45) Veröffentlichungstag und Bekanntmachung des Hinweises auf die Patenterteilung: **22.11.2017**
(21) Anmeldenummer: 15190093.3
(22) Anmeldetag: 16.10.2015
(51) Int. Cl.: A23L 3/3544

(54) **VORRICHTUNG UND VERFAHREN ZUR EXTRAKTION VON AROMASTOFFEN AUS PFLANZLICHEN AROMATRÄGERN IN EINE BRAUFLÜSSIGKEIT**
DEVICE AND METHOD FOR EXTRACTING AROMATIC SUBSTANCES FROM VEGETABLE AROMA CARRIERS IN A BREW LIQUID
DISPOSITIF ET PROCEDE D'EXTRACTION DE MATIERES AROMATIQUES PROVENANT DE SUPPORTS D'AROME VEGETAUX DANS UN LIQUIDE DE BRASSAGE

(30) Priorität: 20.11.2014 EP 14194031; 03.02.2015 DE 102015101518
(43) Veröffentlichungstag der Anmeldung: 25.05.2016
(73) Patentinhaber: GEA BREWERY SYSTEMS GMBH, 97318 Kitzingen (DE)
(72) Erfinder: BAHNS, Patrick, 97318 Kitzingen (DE); MICHEL, Rudolf, Dr., 97318 Kitzingen (DE); SCHELLER, Ludwig, Dr., 97318 Kitzingen (DE)
(74) Vertreter: advotec.

(56) Entgegenhaltungen:
- WO-A1-2012/142988
- DE-A1- 1 442 198
- DE-A1-102012 110 830
- DE-A1-102013 004 562
- DE-A1-102013 101 435

## Beschreibung

Die vorliegende Erfindung betrifft eine Vorrichtung zur Extraktion von Aromastoffen aus pflanzlichen Aromaträgern, insbesondere aus festen Hopfenprodukten, beispielsweise Hopfenpellets, in eine Brauflüssigkeit nach dem Oberbegriff des Anspruchs 1. Die Erfindung betrifft weiter ein Verfahren zur Extraktion von Aromastoffen aus pflanzlichen Aromaträgern in eine Brauflüssigkeit.

Gattungsgemäße Vorrichtungen und Verfahren werden beim Brauen von Bier zur Abtrennung von Feststoffen aus Hopfenprodukten bei der Hopfung von Würze und von Bier eingesetzt, was in allen Stufen der Bierherstellung erfolgen kann. Diese sogenannte Aromahopfung kann mittels der heißen Brauflüssigkeit als sogenannte Heißhopfung oder auch nach der Gärung im fertigen Bier als sogenannte Kalthopfung (auch als "dry hopping" bekannt) erfolgen.

Bei der Herstellung von Bier wird während der Würzeherstellung Hopfen zur Würze gegeben. Dies wird auch Heißhopfung genannt. Der Hopfen hat hierbei unter anderem die Aufgabe, dem Bier eine Bitternote und ein Hopfenaroma zu geben. Handelsüblich werden hierfür Hopfenpellets, die Feststoffe enthalten, Hopfenextrakt oder auch Naturhopfen verwendet. Bei der Hopfung im Heißprozess, also während des Sudhausprozesses, wird der Hopfen in der Regel während der Würzekochung zugegeben. Zur Betonung des Hopfenaromas kann der Hopfen auch nach der Heißtrubabscheidung, also nach dem Whirlpool und vor dem Würzekühler, zugegeben werden. Hierdurch wird vermieden, dass die flüchtigen Hopfenaromen wieder ausdampfen und sich verflüchtigen.

Aufgrund geänderter Verbraucherwünsche wird zunehmend Bier mit stark betontem Hopfenaroma im Markt gewünscht. Um dies zu erreichen, werden die Biere zunehmend auch kalt gehopft. Hierbei wird dem Bier im Kaltbereich, bevorzugt nach der Gärung, Hopfen zugegeben. Dies wird als Kalthopfung bezeichnet. Hierfür werden in der Regel Hopfenpellets oder Naturhopfen verwendet.

Sowohl im Heißbereich als auch im Kaltbereich ist bei der Verwendung von festen Hopfenprodukten, wie insbesondere Hopfenpellets, insbesondere nachteilig, dass nach der Extraktion der Inhaltsstoffe große Mengen an Rückständen, die sogenannten Hopfentreber oder Hopfentrubstoffe, in der Würze bzw. im Bier zurückbleiben. Diese festen Rückstände müssen wieder abgetrennt werden, da sie in den nachfolgenden Prozessen und im fertigen Bier unerwünscht sind.

Im Heißbereich, bei der Hopfengabe während der Würzekochung, erfolgt diese Abscheidung anschließend im Whirlpool, Setzbottich oder mittels Zentrifuge, wo die Hopfentrübstoffe, zusammen mit dem Eiweißtrub, nämlich dem Heißtrub, abgeschieden werden.

Um dabei eine gute Abscheidung zu erzielen, muss der Whirlpool über eine ausreichend große Abscheidefläche verfügen, um den Hopfentrub aufnehmen und abscheiden zu können. Bei Bieren mit großen Hopfenmengen sind die Whirlpool-Gefäße dann entsprechend größer zu dimensionieren, was zusätzliche Investitionskosten und auch größere Verluste an Würze bringt.

Bei der Kalthopfung wird der Hopfentreber durch Filtration oder Separation wieder abgeschieden, was allerdings zusätzliche Kosten verursacht, da die zusätzlichen Trübstoffe in der Regel die Kapazität bzw. die Leistung des Filters deutlich reduzieren bzw. die Investition in eine (gegebenenfalls spezielle) Zentrifuge erforderlich wird. Auch liegen die Hopfentrubstoffe teilweise sehr kompakt im Gärtank, so dass sie nur schwer entfernt werden können.

Aus der DE 10 2013 101 435 A1 sind eine Vorrichtung und ein Verfahren zur Extraktion von Aromastoffen aus pflanzlichen Aromaträgern in eine Brauflüssigkeit bekannt. Als Feststoff-Abscheidevorrichtung zur Abscheidung der unlöslichen Hopfentrübstoffe wird hierbei entweder ein Hydrozyklon oder ein Filter, insbesondere ein Spaltsiebfilter, verwendet. Nachteilig an der Verwendung eines Hydrozyklons ist dabei, dass die Kapazität des Hydrozyklons nur sehr aufwendig auf die jeweils notwendige Kapazität bei der Hopfentrubabscheidung abgestimmt werden kann. Da der Hydrozyklon auf komplexen strömungsmechanischen Wirkprinzipien beruht, kann die Dimensionierung des Hydrozyklons nicht ohne Weiteres abhängig von der jeweils notwendigen Kapazität zur Hopfentrubabscheidung abgestimmt werden. Die Verwendung eines Filters zur Hopfentrubabscheidung hat den Nachteil, dass diese Filter, insbesondere Siebfilter, sehr leicht zugesetzt werden und dann für eine weitere Nutzung aufwendig gereinigt werden müssen.

Aufgabe der vorliegenden Erfindung ist es deshalb, eine neue Vorrichtung und ein neues Verfahren zur Extraktion von Aromastoffen aus pflanzlichen Aromaträgern, insbesondere Hopfenprodukten, in eine Brauflüssigkeit vorzuschlagen, mit denen die oben beschriebenen Nachteile der bekannten Feststoff-Abscheidevorrichtungen, nämlich eines Hydrozyklons bzw. eines Spaltsiebfilters, vermieden werden. Diese Aufgabe wird durch eine Vorrichtung bzw. ein Verfahren nach der Lehre der unabhängigen Hauptansprüche gelöst.

Vorteilhafte Ausführungsformen der Erfindung sind Gegenstand der Unteransprüche.

Die erfindungsgemäße Vorrichtung beruht auf dem Grundgedanken, dass als Feststoff-Abscheidevorrichtung ein Schwebebettextraktor verwendet wird. Der Schwebebettextraktor beruht dabei auf dem Grundprinzip, dass ein entsprechendes Gefäß mit einer Suspension aus der Brauflüssigkeit, beispielsweise dem Bier, und den darin fein verteilten Feststoffpartikeln des Aromaträgers aufgenommen wird. Während des Betriebs des Schwebebettextraktors wird der Schwebebettextraktor dann ausgehend von einem Zulauf durch das sich am Boden des Schwebebettestraktors bildende Suspensionsbett hin zu einem Auslauf durchströmt. Die Strömung der Brauflüssigkeit durch den Schwebebettextraktor wird dabei durch den Betrieb einer Förderpumpe aufrechterhalten. Die Fördergeschwindigkeit der Förderpumpe ist dabei auf einen Wert eingestellt, bei dem die durchschnittlich vertikale Fördergeschwindigkeit der Brauflüssigkeit im Schwebebettextraktor kleiner ist als die durchschnittlich vertikale Sinkgeschwindigkeit der Feststoffpartikel. Durch diese Geschwindigkeitsdifferenz wird erreicht, dass sich die Feststoffpartikel beim Durchfördern der Brauflüssigkeit durch den Schwebebettextraktor von den flüssigen Anteilen trennen und im Suspensionsbett zurückgehalten werden. Zugleich wird durch den unmittelbaren Kontakt der Brauflüssigkeit mit den Aromaträgern erreicht, dass die lösbaren Bestandteile der Aromastoffe aus den Aromaträgern gelöst werden.

Soweit die Brauflüssigkeit Alkohol enthält, insbesondere durch Verwendung von fertig gegorenem Bier, kann der Löseprozess der lösbaren Aromastoffe aus den Aromaträgern deutlich beschleunigt bzw. gesteigert werden. Die Kapazität des Schwebebettextraktors kann in sehr einfacher Weise auf die jeweils notwendige Vorrichtungskapazität angepasst werden, da bereits durch einfache Querschnittsvergrößerung des als Schwebebettextraktor verwendeten Gefäßes eine stufenlose Skalierung der Durchflusskapazität erreicht werden kann. Da die Trennung der Feststoffe von der Flüssigkeit im Schwebebettextraktor allein auf dem physikalischen Unterschied der jeweiligen Strömungsgeschwindigkeiten der Flüssigkeit einerseits und der Sinkgeschwindigkeit der unlösbaren Feststoffe andererseits beruht, ist ein Verstopfen dieser Feststoff-Abscheidevorrichtung prinzipiell ausgeschlossen.

Soweit die erfindungsgemäße Vorrichtung zur Hopfung von Würze bzw. Bier verwendet wird, ist es grundsätzlich beliebig, in welcher Form der Hopfen zugegeben wird. Grundsätzlich kann der Hopfen als Naturhopfen, als Hopfenpulver, als Hopfenpellet oder auch als Hopfenextrakt zugegeben werden. Soweit die Zugabe von Hopfenpellets gewählt wird, können die Hopfenpellets gemäß einer bevorzugten Vorrichtungsvariante durch eine Einfüllöffnung direkt in den Schwebebettextraktor zugegeben werden. Die Hopfenpellets bestehen dabei aus gepressten Hopfenpartikeln, die ihrerseits wiederum durch Zerkleinerung des Naturhopfens hergestellt werden. Für die Extraktion der Aromastoffe ist es dabei unbedingt erforderlich, dass die Hopfenpellets vor der eigentlichen Schwebebettextraktion klumpenfrei zerkleinert werden, so dass eine feine Suspension aus Brauflüssigkeit und Hopfenpartikeln gebildet werden kann. Um diese Zerkleinerung der Hopfenpellets zu ermöglichen, kann nach der Zugabe der Brauflüssigkeit in den Hopfenextraktor zunächst die Förderrichtung der Förderpumpe mehrfach umgeschaltet werden, um die Brauflüssigkeit mit jeweils entgegengesetzter Förderrichtung durch den Schwebebettextraktor zu fördern. Durch die sich zyklisch umkehrende Strömung werden die Hopfenpellets dann in der Brauflüssigkeit aufgelöst und bilden eine feine Suspension aus Brauflüssigkeit und Hopfenpartikeln.

Im Hinblick auf eine möglichst feine Suspension aus Brauflüssigkeit und Hopfenpartikeln kann zusätzlich auch ein antreibbares Mischorgan, insbesondere ein Leitstrahlmischer oder Scherrührer, im Schwebebettextraktor angeordnet werden. Durch Antrieb des Mischorgans ist es dann möglich, die Zerkleinerung der Hopfenpellets zu befördern bzw. zu beschleunigen.

Um zu verhindern, dass Aromaträger beim Befüllen des Extraktors die Auslaufleitung verblocken, ist es besonders vorteilhaft, wenn im Schwebebettextraktor ein durchströmbares Tragelement, insbesondere ein Siebboden, vorgesehen ist. Bei und nach dem Befüllen des Schwebebettextraktors mit den Aromaträgern können die Aromaträger auf dem Tragelement trocken abgelagert werden, so dass unerwünschte Verbackungs- bzw. Verblockungsprozesse ausgeschlossen sind. Erst bei der Befüllung des Schwebebettextraktors mit der Brauflüssigkeit werden dann die Aromaträger vollständig durchfeuchtet und in der Brauflüssigkeit zerkleinert.

Die Abscheidekapazität des Schwebebettextraktors im Hinblick auf sehr feine Feststoffpartikel ist dahingehen begrenzt, dass eine immer feinere Abscheidung von Feststoffpartikeln eine sehr hohe Geschwindigkeitsdifferenz zwischen den Durchströmgeschwindigkeiten der Brauflüssigkeit einerseits und der Sinkgeschwindigkeit der Feststoffpartikel andererseits erfordert. Um bei akzeptabler Durchflussgeschwindigkeit der Brauflüssigkeit durch den Schwebebettextraktor dennoch eine entsprechend hohe Reinheit der Brauflüssigkeit zu erreichen, kann es deshalb vorteilhaft sein, wenn ab dem Auslauf des Schwebebettextraktors eine Feinfiltervorrichtung, insbesondere ein rückspülbares Eckrohrsieb, zur Abtrennung von Feinanteilen des Aromaträgers aus der Brauflüssigkeit, nachgeschaltet ist. Mit der Feinfiltervorrichtung hat der Anwender dann die Möglichkeit, die jeweils gewünschte Filterqualität auch im Hinblick auf feine und sehr feine Feststoffpartikel unabhängig von dem Betrieb des Schwebebettextraktors einzustellen.

Soweit eine Feinfiltervorrichtung vorgesehen ist, ist es besonders vorteilhaft, wenn in der Vorrichtung eine Bypassleitung parallel zur Feinfiltervorrichtung vorgesehen ist, um die Feinfiltervorrichtung gegebenenfalls umgehen zu können. Die erfindungsgemäße Vorrichtung wird bevorzugt im Gär- und Lagerkeller einer Brauerei Verwendung finden, um das in den Tanks befindliche Bier kalt zu hopfen. Um das in den verschiedenen Tanks lagernde Bier mit der erfindungsgemäßen Vorrichtung einfach hopfen zu können, ist es besonders vorteilhaft, wenn die Vorrichtung auf einem transportablen, insbesondere fahrbaren Gestell angeordnet ist und mit entsprechenden Anschlüssen an einen Gärtank angeschlossen werden kann. Damit ist es dann für den Anwender möglich, bedarfsbezogen die Vorrichtung jeweils an einzelne Tanks heranzufahren und die entsprechende Aromanachbehandlung durchzuführen.

Um die notwendige Geschwindigkeitsdifferenz zwischen der Sinkgeschwindigkeit der Hopfenpartikel einerseits und der Strömungsgeschwindigkeit der Brauflüssigkeit andererseits einzuhalten, ist es besonders vorteilhaft, wenn die Förderleistung der Förderpumpe in der erfindungsgemäßen Vorrichtung regelbar ist.

Das erfindungsgemäße Verfahren zur Extraktion von Aromastoffen aus pflanzlichen Aromaträgern in eine Brauflüssigkeit beruht auf der Verfahrensidee, dass zunächst eine Suspension aus Brauflüssigkeit und den Feststoffpartikeln des Aromaträgers gebildet wird. Dies kann beispielsweise in einem separaten Puffergefäß geschehen. Die Suspension wird anschließend in einen Schwebebettextraktor eingebracht, wo sich ein Suspensionsbett bildet. Beim Durchströmen des Schwebebettextraktors mit weiterer Brauflüssigkeit wird dann der Aromaträger durch Lösen der Aromastoffe ausgelaugt, und zum anderen werden die Feststoffe des Aromaträgers aus der Brauflüssigkeit abgetrennt. Soweit die trockenen Aromaträger unmittelbar in den Schwebebettextraktor eingegeben werden, kann die Bildung der Suspension, d.h. der erste Verfahrensschritt, ganz oder teilweise auch unmittelbar im Schwebebettextraktor stattfinden, so dass Suspensionsbildung und Einbringung der Suspension in den Schwebebettextraktor zeitlich zusammenfallen.

Um bei Verwendung von Hopfenpellets die erforderliche Suspension aus Aromaträgerpartikeln und Brauflüssigkeit zu bilden, kann die Brauflüssigkeit mit wechselnder Strömungsrichtung durch den Schwebebettextraktor gepumpt werden, so dass sich die Hopfenpellets dadurch in die bei der Herstellung der Pellets verpressten Hopfenpartikel auflösen.

Zur Entfernung von Feinanteilen des Aromaträgers aus der Brauflüssigkeit kann erfindungsgemäß eine Feinfiltervorrichtung verwendet werden, die nach der Abtrennung der Feststoffe im Schwebebettextraktor von der bereits feststoffreduzierten Brauflüssigkeit durchströmt wird.

Gemäß einer bevorzugten Verfahrensvariante ist es im Verfahrensschritt c) vorgesehen, dass Brauflüssigkeit aus einem Gefäß oder Tank, insbesondere nämlich Bier aus einem Gär- oder Lagertank, verwendet wird. Diese Brauflüssigkeit aus dem Tank kann dann zirkulierend durch den Schwebebettextraktor gefördert werden, bis der gewünschte Auslaugungsgrad der Aromaträger erreicht ist. Wenn im Folgenden von Speichergefäß, Gefäß oder Tank gesprochen wird, so sind diese Begriffe synonym zu verwenden. Auch Gär- und Lagertank sind als Synonyme zu verwenden.

Wird im Verfahrensschritt c) die Brauflüssigkeit aus einem Speichergefäß verwendet und zirkulierend durch den Schwebebettextraktor gefördert, ist es besonders vorteilhaft, wenn die Brauflüssigkeit dann nach dem Verfahrensschritt c) in diesem Gefäß gesammelt und zum Ausgleich von Konzentrationsunterschieden mit dem restlichen Tankinhalt umgewälzt wird. Im Ergebnis kann dadurch erreicht werden, dass die Aromakonzentration in der im Gefäß enthaltenen Brauflüssigkeit im Wesentlichen überall gleich hoch ist.

In welcher Form Aromaträger dem Verfahren zugeführt werden, ist grundsätzlich beliebig. Besonders vorteilhaft ist die Verwendung von Hopfenpellets.

Auch welche Art von Brauflüssigkeit für das Verfahren genutzt wird, ist grundsätzlich beliebig. Beispielsweise ist auch die Verwendung von Würze denkbar. Eine besonders hohe Ausbeute wird bei Verwendung von alkoholhaltigen Brauflüssigkeiten erreicht, da die lösbaren Hopfenbestandteile ölhaltig sind und sich somit besonders gut in Alkohol lösen lassen. Soweit alkoholhaltiges Bier für das Verfahren verwendet wird, kann es sich dabei sowohl um gereiftes Bier als auch um noch gärendes Bier handeln. Ideal für den Prozess ist eine hefearme Brauflüssigkeit, da Hefe in der Lage ist, Hopfenkomponenten an sich zu binden und somit für den weiteren Prozess unzugänglich zu halten. In der Praxis hat sich ein hefearmes Bier aus dem Lagertank bewährt.

Um unerwünschte Oxidationsvorgänge zu verhindern, ist es besonders bei allen erfindungsgemäßen Verfahrensvarianten vorteilhaft, wenn der Schwebebettextraktor vor der Befüllung mit Aromaträgern bzw. Brauflüssigkeit mit einem Inertgas befüllt wird. Dadurch wird verhindert, dass der Luftsauerstoff in direkten Kontakt mit Aromaträgern bzw. mit der Brauflüssigkeit in Kontakt kommt und unerwünschte Oxidationsvorgänge in Gang setzt.

Um eine möglichst hohe Rohstoffausbeute zu erreichen, ist es bei allen erfindungsgemäßen Verfahrensvarianten besonders vorteilhaft, wenn nach Erreichen des gewünschten Auslaugungsgrades der Schwebebettextraktor und/oder die am Schwebebettextraktor angeschlossenen Förderleitungen mit Wasser leer gedrückt werden. Durch das Eindrücken von Wasser kann die dort vorhandene Brauflüssigkeit mit den darin gelösten Aromastoffen verdrängt und in nachfolgenden Prozessstufen weitergenutzt werden. Idealerweise handelt es sich bei diesem Wasser um sogenanntes entgastes Wasser, das einen sehr geringen Sauerstoffgehalt hat. Grundsätzlich ist aber auch jedes andere Wasser geeignet.

Eine Vorrichtung und ein Verfahren gemäß der vorliegenden Erfindung sind in den Zeichnungen schematisch dargestellt und werden nachfolgend beispielhaft erläutert.

Es zeigen:
- **Fig. 1**: eine Vorrichtung zur Extraktion von Aromastoffen bei Verfahrensbeginn;
- **Fig. 2**: die Vorrichtung gemäß Fig. 1 bei Befüllung des Schwebebettextraktors mit Hopfenpellets;

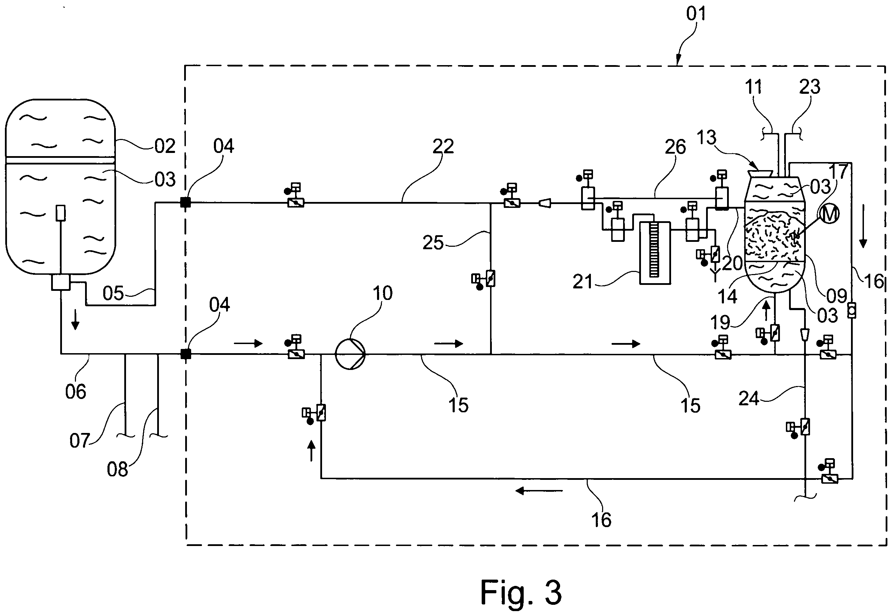

- **Fig. 3**: die Vorrichtung gemäß Fig. 2 bei Befüllung des Schwebebettextraktors mit Bier;
- **Fig. 4**: die Vorrichtung gemäß Fig. 3 bei Bildung der Suspension aus Bier und Hopfenpartikeln;
- **Fig. 5**: die Vorrichtung gemäß Fig. 4 beim Absetzen der Suspension aus Bier und Hopfenpartikeln am Boden des Schwebebettextraktors;
- **Fig. 6**: die Vorrichtung gemäß Fig. 5 während des Durchpumpens von Brauflüssigkeit durch den Schwebebettextraktor zur Lösung der lösbaren Aromastoffe in das Bier;
- **Fig. 7**: die Vorrichtung gemäß Fig. 6 beim Entleeren des Schwebebettextraktors;
- **Fig. 8**: die Vorrichtung gemäß Fig. 7 bei der Entfernung der Festsuspension aus dem Schwebebettextraktor;
- **Fig. 9**: die Vorrichtung gemäß Fig. 8 beim Umpumpen des Biers zur Homogenisierung der Aromastoffkonzentration.

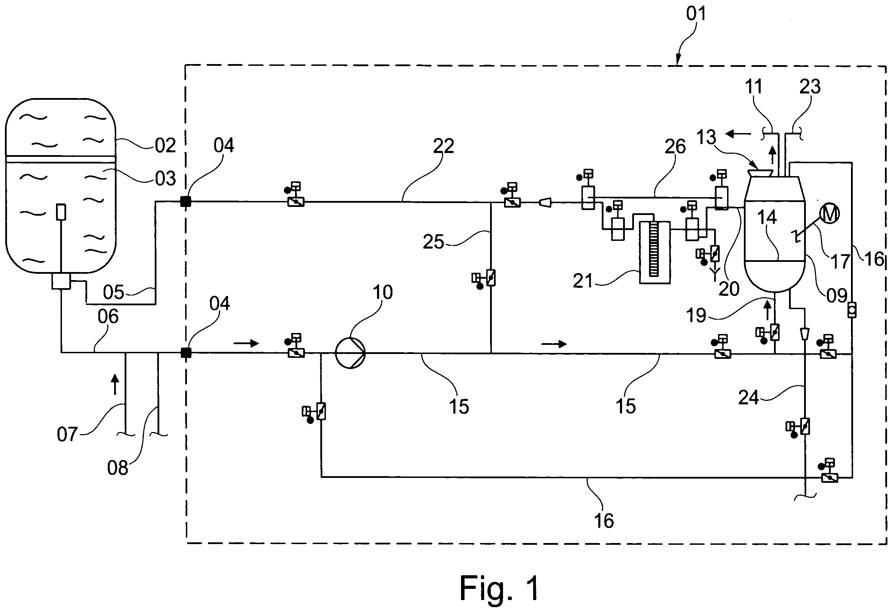

**Fig. 1** zeigt eine erfindungsgemäße Vorrichtung 01 zur Extraktion von Aromastoffen aus pflanzlichen Aromaträgern, nämlich Hopfenpellets, in eine Brauflüssigkeit, nämlich Bier. Die Vorrichtung ist in Fig. 1 lediglich schematisiert dargestellt, wobei allein die Bauteile der Vorrichtung 01 dargestellt sind, die zum Verständnis der Erfindung erforderlich sind. Die Vorrichtung 01 kann bevorzugt auf einem fahrbaren Gestell angebracht sein, um die Vorrichtung 01 mobil zu unterschiedlichen Einsatzorten bringen zu können.

Bei der in Fig. 1 dargestellten Einsatzvariante wird die Vorrichtung 01 in einem Gär- oder Lagerkeller zur Kalthopfung von Bier verwendet. Dabei wird die Vorrichtung 01 zunächst zu einem Gärtank 02 gefahren, in dem gereiftes oder noch gärendes Bier 03 gelagert ist. Der Gärtank 02 ist in Fig. 1 lediglich verkleinert dargestellt. Über Anschlusskupplungen 04 wird die Vorrichtung 01 an den Zulauf 05 und den Ablauf 06 des Gärtanks 02 angeschlossen. In den Ablauf 06 des Gärtanks 02 mündet außerdem eine CO₂-Versorgungsleitung 07 und eine BrauwasserVersorgungsleitung 08. Alternativ können die Leitungen 07 und 08 auch direkt in die Vorrichtung 01 geleitet werden. Damit erhöht sich nur die Anzahl der Anschlüsse aus der Brauerei in die Vorrichtung 01.

Die Vorrichtung 01 besteht in ihrem Kern aus einem Schwebebettextraktor 09 durch den, angetrieben über eine regelbare Förderpumpe 10, aus diversen Rohrleitungen und verschiedenen Absperrventilen unterschiedliche Medien hindurchgepumpt werden können. Vor Beginn des eigentlichen Verfahrens zur Extraktion wird, wie in Fig. 1 dargestellt, zunächst CO₂ aus der CO₂-Versorgungsleitung 07 in die Vorrichtung 01 eingeströmt, und die verschiedenen Rohrleitungen und der Schwebebettextraktor 09 werden mit CO₂ geflutet. An der höchsten Stelle kann das CO₂ über eine Gasableitung 11 aus der Vorrichtung 01 entweichen.

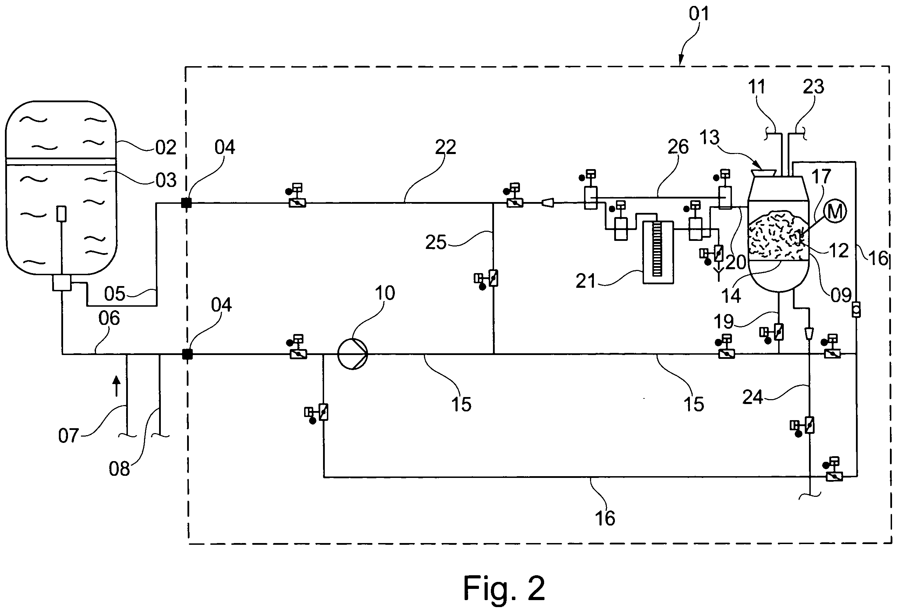

Sobald die Vorrichtung 01 mit CO₂ geflutet ist, wird, wie in **Fig. 2** dargestellt, der Schwebebettextraktor zunächst mit trockenen Hopfenpellets 12 befüllt. Die Befüllung erfolgt dabei durch eine Einfüllöffnung 13. Die Hopfenpellets kommen bei der Befüllung auf einem durchströmbaren Tragelement 14, nämlich einem Siebboden, zur Auflage. Die Sieböffnungen sind dabei gerade so groß gewählt, dass die Hopfenpellets 12 nicht durch die Sieböffnungen hindurchfallen können. Zugleich kann das Tragelement 14 aber problemlos von Flüssigkeiten durchströmt werden. Die Prozessschritte CO₂-Flutung des Systems und Befüllung des Extraktors mit Hopfenpellets können auch in der Ablaufreihenfolge getauscht werden. Dies ändert nichts am erfindungsgemäßen Verfahren.

Nach der Befüllung mit Hopfenpellets wird die Vorrichtung 01 und insbesondere der Schwebebettextraktor 09 mit Bier 03 befüllt. Dazu wird das Bier aus dem Gärtank 02 durch Antrieb der Förderpumpe 10 durch den Ablauf 06 und den Vorlauf 15 von unten in den Schwebebettextraktor 09 eingepumpt, bis dieser vollständig mit Bier gefüllt ist und über eine Zirkulationsleitung 16 zurück zum Vorlauf 15 strömt. Das im System enthaltene Gas wird dabei über die Ableitung 11 aus der Vorrichtung entfernt.

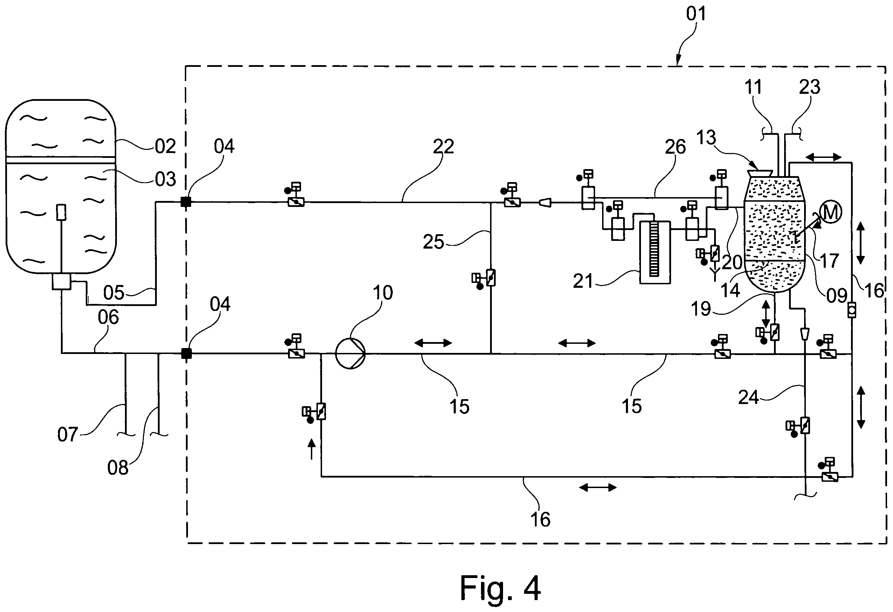

Sobald der Schwebebettextraktor 09 und die Zirkulationsleitung 16 vollständig mit Bier geflutet sind, wird der Ablauf 06 des Gärtanks 02 durch Umschalten eines Ventils von der Vorrichtung 01 getrennt und, wie in **Fig. 4** dargestellt, das Bier von der Förderpumpe 10 zirkulierend durch den Vorlauf 15 und die Zirkulationsleitung 16 umgepumpt. Durch das Umpumpen des Bieres lösen sich im Schwebebettextraktor 09 die gepressten Hopfenpellets auf, und es wird eine feine Suspension aus Hopfenpartikeln und Bier gebildet. Um die Suspensionsbildung zu erleichtern, wird die Förderrichtung der Förderpumpe 10 wiederholt umgeschaltet und dadurch das Bier mit wechselnden Förderrichtungen durch den Schwebebettextraktor 09 hindurchgefördert. Außerdem kann die Suspensionsbildung durch Antrieb eines Mischungsorgans 17, nämlich eines Leitstrahlmischers oder Scherrührers, erleichtert werden.

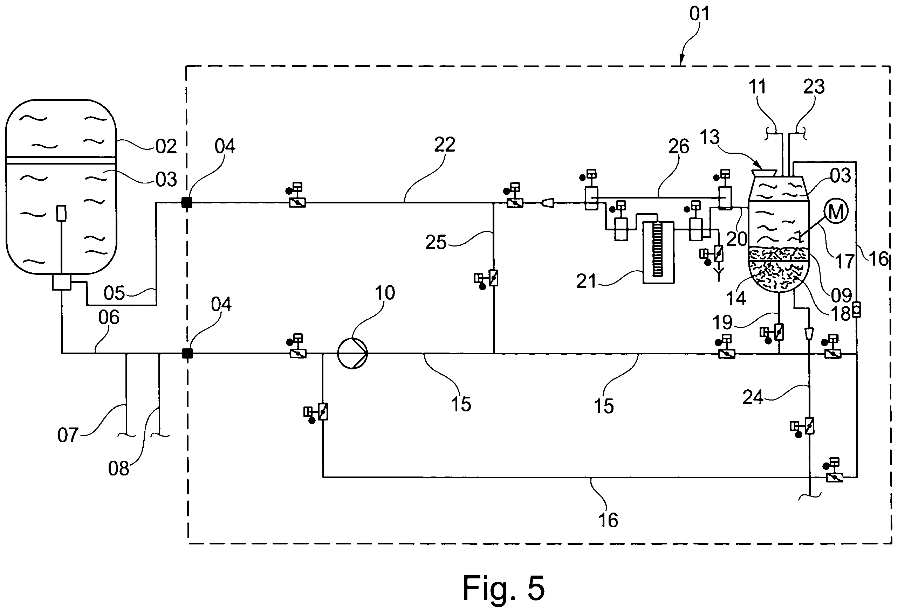

Sobald die Hopfenpellets 12 vollständig zerkleinert sind und die in den Hopfenpellets enthaltenen Hopfenpartikel zusammen mit dem Bier 03 eine fein verteilte Suspension bilden, wird, wie in **Fig. 5** dargestellt, die Förderpumpe 10 kurz abgeschaltet, so dass sich am Boden des Schwebebettextraktors 09 ein Suspensionsbett 18 bilden kann. Die Höhe des Suspensionsbettes 18 sollte dabei nicht mehr als die Hälfte der Höhe des Schwebebettextraktors 09 betragen.

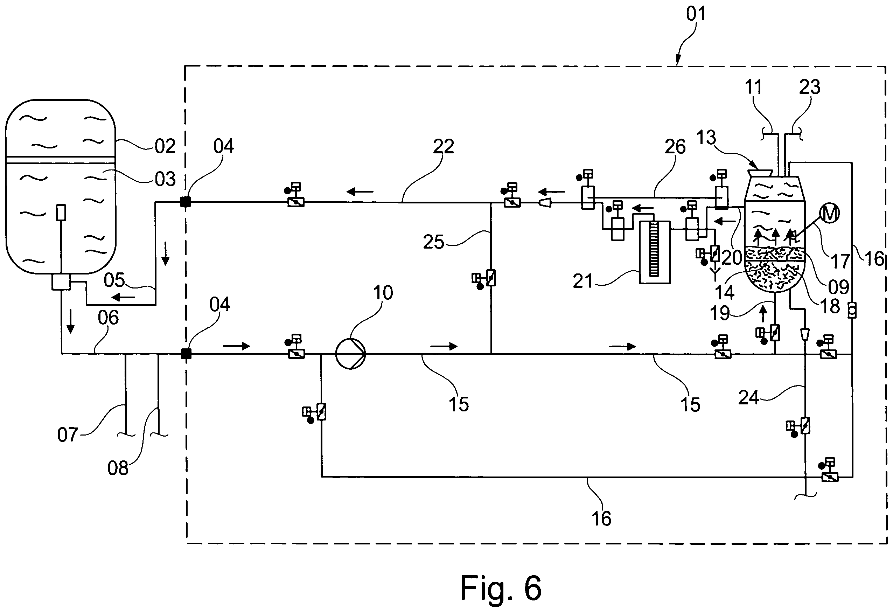

Sobald sich das Suspensionsbett 18 ausreichend beruhig hat, wird die Zirkulationsleitung 16 geschlossen und der Ablauf 06 des Gärtanks 02 wieder durch Öffnen des entsprechenden Ventils an die Vorrichtung 01 angeschlossen. Anschließend wird, wie in Fig. 6 dargestellt, das Bier 03 aus dem Gärtank 02 durch Antrieb der Förderpumpe 10 durch den Vorlauf 15 und den Einlauf 19 von unten in den Schwebebettextraktor 09 eingepumpt. Das Bier durchströmt dann das Suspensionsbett 18 vertikal nach oben und strömt zum Auslauf 20 des Schwebebettextraktors 09. Die Fördergeschwindigkeit der Förderpumpe 10 ist dabei so gewählt, dass die durchschnittliche vertikale Strömungsgeschwindigkeit des Bieres 03 im Schwebebettextraktor 09 kleiner ist als die durchschnittliche vertikale Sinkgeschwindigkeit der Hopfenpartikel. Durch diese Geschwindigkeitsdifferenz wird erreicht, dass sich die unlöslichen Feststoffpartikel am Boden des Schwebebettextraktors 09 absetzen und gemeinsam das Suspensionsbett 18 bilden. Lediglich sehr feine Feststoffpartikel können gemeinsam mit dem Bier 03 über den Auslauf 20 aus dem Schwebebettextraktor 09 herausgefördert werden. Zur Entfernung dieser sehr feinen Feststoffpartikel durchströmt das Bier anschließend eine Feinfiltervorrichtung 21, nämlich ein rückspülbares Eckrohrsieb. Anschließend strömt das Bier dann über den Rücklauf 22 der Vorrichtung 01 zum Zulauf 05 des Gärtanks 02 und gelangt somit zurück in den Gärtank 02. Abhängig vom gewünschten Filtrationsgrad kann die Feinfiltervorrichtung 21 durch eine Bypassleitung 26 auch ganz oder teilweise umgangen werden. Diese Entscheidung obliegt dem Anwender.

Falls es prozesstechnisch möglich ist, kann die Feinfiltervorrichtung 21 auch ganz entfallen. Dann würden die feinen Feststoffpartikel in den Gärtank 02 gelangen und müssten anderweitig aus dem Bier 03 entfernt werden. Auch diese Entscheidung muss einsatzbezogen durch den Anwender fallen.

Die in **Fig. 6** dargestellte Zirkulation des Bieres 03 aus dem Gärtank 02 dient der Auslaugung der Aromastoffe aus den im Suspensionsbett 18 enthaltenen Hopfenpartikeln, wobei zugleich für eine ausreichende Trennung der flüssigen und festen Bestandteile der Suspension durch die Strömungseigenschaften des Schwebebettextraktors 09 gesorgt ist.

Grundsätzlich können die Prozessschritte zur Bildung der Suspension, wie in **Fig. 4** dargestellt, und zur Auslaugung, wie in **Fig. 6** dargestellt, auch mehrfach nacheinander durchgeführt werden, um die Auslaugung durch erneutes Aufwirbeln des Suspensionsbettes 18 weiter zu erhöhen. Zwischen den jeweiligen Prozessschritten zur Bildung der Suspension wird dann jeweils der Prozessschritt nach **Fig. 5** zum Ausbilden des Suspensionsbettes durchgeführt. Dieser Ablauf kann den Grad der Auslaugung noch weiter erhöhen.

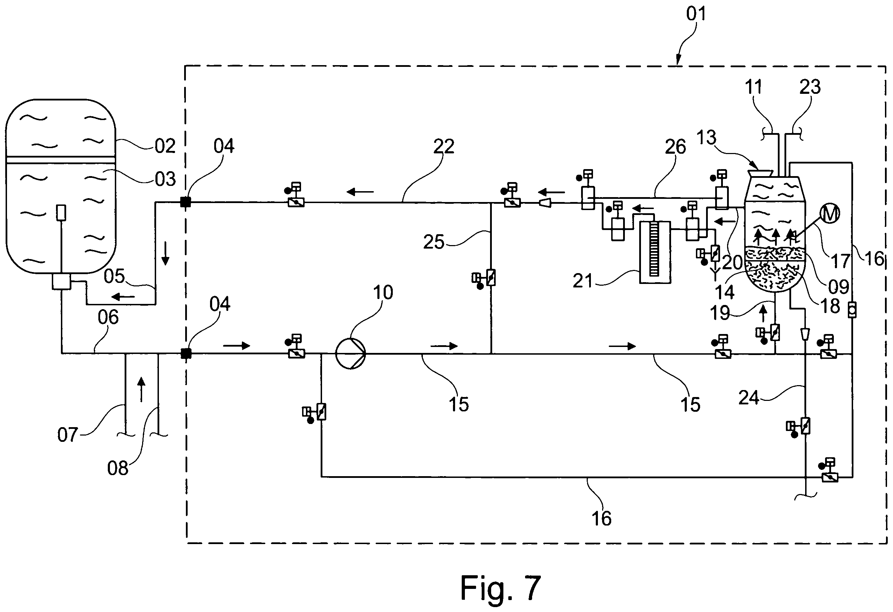

Sobald ein ausreichender Auslaugungsgrad der Hopfenpartikel erreicht ist, wird der Ablauf 06 des Gärtanks 02 geschlossen. Dann wird, wie in **Fig. 7** dargestellt, Brauwasser aus der Brauwasserversorgungsleitung 08 in den Vorlauf 15 eingedrückt, um das in der Vorrichtung 01 verbliebene Bier über den Rücklauf 22 und den Zulauf 05 des Gärtanks 02 zurück in den Gärtank 02 zu drücken.

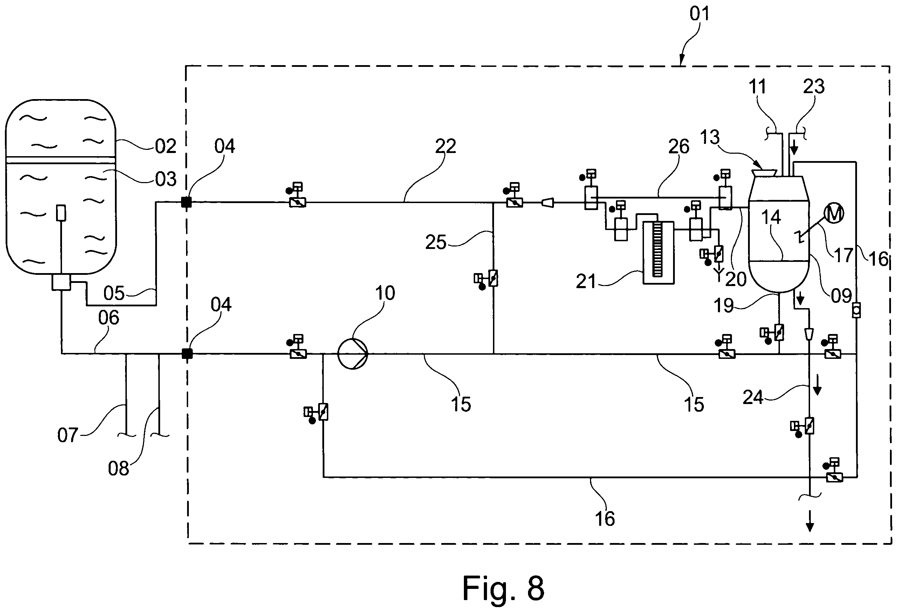

Sobald die Vorrichtung 01 vollständig vom Bier 03 geleert ist, wird, wie in **Fig. 8** dargestellt, ein geeignetes Reinigungsfluid, bevorzugt Brauwasser 08, über eine Leitung 23 in den Schwebebettextraktor 09 eingedrückt und die verbliebene Restsuspension über eine Ablaufleitung 24 in Richtung einer nicht dargestellten Gullyleitung abgeführt. Anschließend kann die gesamte Anlage mittels einer in den Zeichnungen nicht dargestellten CIP-Reinigungsvorrichtung maschinell gereinigt werden.

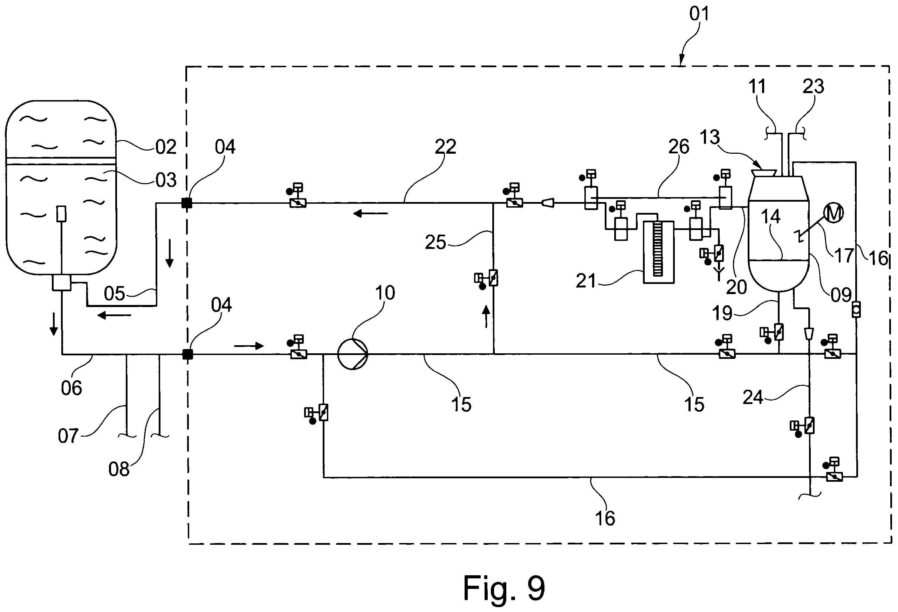

Um die Konzentration der im Bier 03 gelösten Aromastoffe zu homogenisieren, kann das Bier 03, wie in **Fig. 9** dargestellt, durch Antrieb der Förderpumpe 10 im Gärtank 02 durch eine Zirkulationsleitung 25 umgepumpt und durchmischt werden.

## Patentansprüche

1. Vorrichtung (01) zur Extraktion von Aromastoffen aus pflanzlichen Aromaträgern (12) in eine Brauflüssigkeit (03), insbesondere in Bier, mit einer Feststoff-Abscheidevorrichtung, mit der die pflanzlichen Aromaträger (12) von der Brauflüssigkeit getrennt werden können, **dadurch gekennzeichnet,**
**dass** die Feststoff-Abscheidevorrichtung in der Art eines Schwebebettextraktors (09) ausgebildet ist, wobei der Schwebebettextraktor (09) ein Suspensionsbett (18) aufnehmen kann, das aus der Brauflüssigkeit (03) und den in den Aromaträgern (12) enthaltenen Feststoffpartikeln (12) gebildet ist, und wobei der Schwebebettextraktor (09) zumindest einen Zulauf (19) und einen Auslauf (20) für die Brauflüssigkeit (03) aufweist, und wobei die Brauflüssigkeit (03) mit einer Förderpumpe (10) vom Zulauf (19) durch den Schwebebettextraktor (09) zum Auslauf (20) gepumpt werden kann, und wobei die Fördergeschwindigkeit der Förderpumpe (10) auf einen Wert einstellbar ist, bei dem die durchschnittliche vertikale Fördergeschwindigkeit der Brauflüssigkeit (03) im Schwebebettextraktor (09) kleiner ist als die durchschnittliche vertikale Sinkgeschwindigkeit der Feststoffpartikel im Schwebebettextraktor (09).

2. Vorrichtung nach Anspruch 1,
**dadurch gekennzeichnet,**
**dass** der Schwebebettextraktor (09) eine Einfüllöffnung zum Befüllen mit Hopfenpellets aufweist, wobei die Förderrichtung der Förderpumpe (10) umschaltbar ist, und wobei die Hopfenpellets durch Umschalten der Förderrichtung der Brauflüssigkeit (03) im Schwebebettextraktor (09) unter Bildung einer Suspension aus Brauflüssigkeit und Feststoffpartikeln zerkleinert werden können.

3. Vorrichtung nach Anspruch 1 oder 2,
**dadurch gekennzeichnet,**
**dass** im Schwebebettextraktor (09) ein antreibbares Mischorgan (17), insbesondere ein Leitstrahlmischer oder Scherrührer, zur Zerkleinerung der Aromaträger (12) und/oder zur Vermischung der Suspension angeordnet ist.

4. Vorrichtung nach einem der Ansprüche 1 bis 3,
**dadurch gekennzeichnet,**
**dass** im Schwebebettextraktor (09) ein durchströmbares Tragelement (14), insbesondere ein Siebboden, angeordnet ist, auf dem die Aromaträger (12) beim und nach dem Befüllen des Schwebebettextraktors (09) mit den Aromaträgern (12) und vor der Bildung der Suspension durch Zugabe von Brauflüssigkeit (03) abgelagert werden können.

5. Vorrichtung nach einem der Ansprüche 1 bis 4,
**dadurch gekennzeichnet,**
**dass** dem Auslauf (20) des Schwebebettextraktors (09) mittelbar oder unmittelbar eine Feinfiltervorrichtung (21), insbesondere ein rückspülbares Eckrohrsieb, zur Abtrennung von Feinanteilen der Feststoffpartikel aus der Brauflüssigkeit (03), nachgeschaltet ist.

6. Vorrichtung nach Anspruch 5,
**dadurch gekennzeichnet,**
**dass** parallel zur Feinfiltervorrichtung (21) eine Bypassleitung (26) vorgesehen ist, durch die die Feinfiltervorrichtung (21) umgangen werden kann.

7. Vorrichtung nach einem der Ansprüche 1 bis 6,
**dadurch gekennzeichnet,**
**dass** die Vorrichtung (01) auf einem transportablen, insbesondere fahrbaren, Gestell angeordnet ist.

8. Vorrichtung nach einem der Ansprüche 1 bis 7,
**dadurch gekennzeichnet,**
**dass** die Förderleistung der Förderpumpe (10) regelbar ist.

9. Verfahren zur Extraktion von Aromastoffen aus pflanzlichen Aromaträgern (12) in eine Brauflüssigkeit (03), mit folgenden Verfahrensschritten:
a) Bildung einer Suspension aus Brauflüssigkeit (03) und den in den Aromaträgern (12) enthaltenen Feststoffen;
b) Bildung eines Suspensionsbetts (18) aus Brauflüssigkeit (03) und den in den Aromaträgern (12) enthaltenen Feststoffen in einem Schwebebettextraktor;
c) Förderung der Brauflüssigkeit (03) durch den Schwebebettextraktor (09) mit einer durchschnittlichen vertikalen Fördergeschwindigkeit, die kleiner ist als die durchschnittliche vertikale Sinkgeschwindigkeit der in den Aromaträgern (12) enthaltenen Feststoffe, um die Aromastoffe aus den Feststoffen in die Brauflüssigkeit (03) zu lösen und die Feststoffe des Aromaträgers (12) von der Brauflüssigkeit (03) zu trennen.

10. Verfahren nach Anspruch 9,
**dadurch gekennzeichnet,**
**dass** im Verfahrensschritt a) die trockenen Aromaträger (12) und die Brauflüssigkeit (03) in den Schwebebettextraktor (09) eingefüllt werden, wobei die Brauflüssigkeit (03) anschließend mit wechselnden Förderrichtungen zirkulierend durch den Schwebebettextraktor (09) gefördert wird, um die Feststoffpartikel der Aromaträger unter Bildung einer Suspension zu zerkleinern und ein Suspensionsbett (18) im Schwebebettextraktors zu (09) bilden.

11. Verfahren nach Anspruch 9 oder 10,
**dadurch gekennzeichnet,**
**dass** die Brauflüssigkeit (03) nach Verlassen des Schwebebettextraktors (09) durch eine Feinfiltervorrichtung (21) durchgeleitet wird, um Feinanteile der Feststoffpartikel aus der Brauflüssigkeit (03) zu entfernen.

12. Verfahren nach einem der Ansprüche 9 bis 11,
**dadurch gekennzeichnet,**
**dass** im Verfahrensschritt c) die Brauflüssigkeit (03) aus einem Speichergefäß, insbesondere aus einem Gärtank (02) zur Lagerung von Bier, zirkulierend durch den Schwebebettextraktor (09) gefördert wird.

13. Verfahren nach einem der Ansprüche 9 bis 12,
**dadurch gekennzeichnet,**
**dass** die Brauflüssigkeit (03) nach dem Verfahrensschritt c) in einem Gefäß, insbesondere in einem Gärtank (02), gesammelt und zum Ausgleich von Konzentrationsunterschieden umgewälzt wird.

14. Verfahren nach einem der Ansprüche 9 bis 13,
**dadurch gekennzeichnet,**
**dass** als Aromaträger (12) ein Hopfenprodukt, insbesondere Hopfenpellets, verwendet wird.

15. Verfahren nach einem der Ansprüche 9 bis 14,
**dadurch gekennzeichnet,**
**dass** eine alkoholhaltige Brauflüssigkeit (03), insbesondere gärendes oder gereiftes Bier, verwendet wird.

## Claims

1. A device (01) for extracting aroma substances from vegetable aroma carriers (12) into a brewing liquid (03), in particular into beer, comprising a solids separating device by means of which the vegetable aroma carriers (12) can be separated from the brewing liquid,
**characterized in that**
the solids separating device is realized in the manner of a fluidized bed extractor (09), said fluidized bed extractor (09) being able to accommodate a suspension bed (18) that is composed of the brewing liquid (03) and of the solid particles (12) contained in the aroma carriers (12), and the fluidized bed extractor (09) having at least an inlet (19) and an outlet (20) for the brewing liquid (03), and wherein the brewing liquid (03) can be pumped from the inlet (19) through the fluidized bed extractor (09) to the outlet (20) by means of a feed pump (10), and wherein the feeding speed of the feed pump (10) can be set to a value at which the average vertical feeding speed of the brewing liquid (03) in the fluidized bed extractor (09) is lower than the average vertical sedimentation speed of the solid particles in the fluidized bed extractor (09).

2. The device according to claim 1,
**characterized in that**
the fluidized bed extractor (09) has a filling opening for filling with hop pellets, wherein the feeding direction of the feed pump (10) is switchable, and wherein the hop pellets can be crushed by switching the feeding direction of the brewing liquid (03) in the fluidized bed extractor (09), forming a suspension of brewing liquid and solid particles.

3. The device according to claim 1 or 2,
**characterized in that**
a drivable mixing means (17), in particular a jet mixer or a shear stirrer, for crushing the aroma carriers (12) and/or for mixing the suspension is arranged in the fluidized bed extractor (09).

4. The device according to any one of claims 1 to 3,
**characterized in that**
in the fluidized bed extractor (09), a permeable supporting element (14), in particular a sieve bottom, is arranged on which the aroma carriers (12) can be deposited during and after filling of the fluidized bed extractor (09) with the aroma carriers (12) and prior to forming the suspension by adding brewing liquid (03).

5. The device according to any one of claims 1 to 4,
**characterized in that**
a fine filter device (21), in particular a backflushable corner pipe filter, for separating fine components of the solid particles from the brewing liquid (03) is connected directly or indirectly downstream of the outlet (20) of the fluidized bed extractor (09).

6. The device according to claim 5,
**characterized in that**
parallel to the fine filter device (21), a bypass duct (26) is provided by way of which the fine filter device (21) can be bypassed.

7. The device according to any one of claims 1 to 6,
**characterized in that**
the device (01) is arranged on a transportable, in particular mobile frame.

8. The device according to any one of claims 1 to 7,
**characterized in that**
the feeding rate of the feed pump (10) can be controlled.

9. A method for extracting aroma substances from vegetable aroma carriers (12) into a brewing liquid (03), comprising the following method steps:
a) forming a suspension of the brewing liquid (03) and of the solids contained in the aroma carriers (12);
b) forming a suspension bed (18) of the brewing liquid (03) and of the solids contained in the aroma carriers (12) in a fluidized bed extractor;
c) feeding the brewing liquid (03) through the fluidized bed extractor (09) at an average vertical feeding speed that is lower than the average vertical sedimentation speed of the solids contained in the aroma carriers (12) so as to release the aroma substances from the solids into the brewing liquid (03) and to separate the solids of the aroma carrier (12) from the brewing liquid (03).

10. The method according to claim 9,
**characterized in that**
in method step a), the dry aroma carriers (12) and the brewing liquid (03) are filled into the fluidized bed extractor (09), the brewing liquid (03) being subsequently fed through the fluidized bed extractor (09) in a circulating manner in alternating feeding directions so as to crush the solid particles of the aroma carriers, forming a suspension, and to form a suspension bed (18) in the fluidized bed extractor (09).

11. The method according to claim 9 or 10,
**characterized in that**
after leaving the fluidized bed extractor (09), the brewing liquid (03) is fed through a fine filter device (21) so as to remove fine components of the solid particles from the brewing liquid (03).

12. The method according to any one of claims 9 to 11,
**characterized in that**
in method step c), the brewing liquid (03) is fed from a storage vessel, in particular from a fermentation tank (02) for storing beer, through the fluidized bed extractor (09) in a circulating manner.

13. The method according to any one of claims 9 to 12,
**characterized in that**
after method step c), the brewing liquid (03) is collected in a vessel, in particular in a fermentation tank (02), and is circulated so as to eliminate any concentration differences.

14. The method according to any one of claims 9 to 13,
**characterized in that**
a hop product, in particular hop pellets, is/are used as the aroma carrier (12).

15. The method according to any one of claims 9 to 14,
**characterized in that**
an alcoholic brewing liquid (03), in particular fermenting or matured beer, is used.

## Revendications

1. Dispositif (01) d'extraction de matières aromatiques provenant de supports d'arome végétaux (12) dans un liquide de brassage (03), notamment dans la bière, comprenant un dispositif de séparation de matières solides à l'aide duquel les supports d'arome végétaux (12) peuvent être séparés du liquide de brassage,
**caractérisé en ce que**
le dispositif de séparation de matières solides est configuré comme extracteur à lit flottant (09), ledit extracteur à lit flottant (09) étant apte à loger un lit de suspension (18) qui est formé par le liquide de brassage (03) et les particules solides (12) contenues dans les supports d'arome (12), et l'extracteur à lit flottant (09) ayant au moins une entrée (19) et une sortie (20) pour le liquide de brassage (03), et le liquide de brassage (03) pouvant être pompé à partir de l'entrée (19) à travers l'extracteur à lit flottant (09) vers la sortie (20) à l'aide d'une pompe d'alimentation (10), et la vitesse d'alimentation de la pompe d'alimentation (10) pouvant être réglée sur une valeur à laquelle la vitesse d'alimentation moyenne verticale du liquide de brassage (03) dans l'extracteur à lit flottant (09) est inférieure à la vitesse de sédimentation moyenne verticale des particules solides dans l'extracteur à lit flottant (09).

2. Dispositif selon la revendication 1,
**caractérisé en ce que**
l'extracteur à lit flottant (09) a une ouverture de remplissage pour le remplir de pellets de houblon, la direction d'alimentation de la pompe d'alimentation (10) étant commutable, et les pellets de houblon pouvant être broyés en commutant la direction d'alimentation du liquide de brassage (03) dans l'extracteur à lit flottant (09), tout en formant une suspension de liquide de brassage et de particules solides.

3. Dispositif selon la revendication 1 ou 2,
**caractérisé en ce qu'**
un organe de mélange (17) entraînable, notamment un mélangeur à jet dirigé ou un agitateur de cisaillement, destiné à broyer les supports d'arome (12) et/ou à mélanger la suspension est disposé dans l'extracteur à lit flottant (09).

4. Dispositif selon l'une quelconque des revendications 1 à 3,
**caractérisé en ce qu'**
un élément de support (14) perméable, notamment un fond criblant, est disposé dans l'extracteur à lit flottant (09), sur lequel les supports d'arome (12) peuvent être déposés pendant et après le remplissage de l'extracteur à lit flottant (09) des supports d'arome (12) et avant la formation de la suspension en ajoutant du liquide de brassage (03).

5. Dispositif selon l'une quelconque des revendications 1 à 4,
**caractérisé en ce qu'**
un dispositif de filtre fin (21), notamment un crible de tuyau d'angle rétrolavable, destiné à séparer des composants fins parmi les particules solides du liquide de brassage (03) est lié directement ou indirectement en aval de la sortie (20) de l'extracteur à lit flottant (09).

6. Dispositif selon la revendication 5,
**caractérisé en ce qu'**
une conduite de dérivation (26) est prévue parallèle au dispositif de filtre fin (21), par laquelle le dispositif de filtre fin (21) peut être contourné.

7. Dispositif selon l'une quelconque des revendications 1 à 6,
**caractérisé en ce que**
le dispositif (01) est disposé sur un cadre transportable, notamment sur un cadre mobile.

8. Dispositif selon l'une quelconque des revendications 1 à 7,
**caractérisé en ce que**
le débit de la pompe d'alimentation (10) est réglable.

9. Procédé d'extraction de matières aromatiques provenant de supports d'arome végétaux (12) dans un liquide de brassage (03), comprenant les étapes suivantes :
a) former une suspension du liquide de brassage (03) et des matières solides contenues dans les supports d'arome (12) ;
b) former, dans un extracteur à lit flottant, un lit de suspension (18) du liquide de brassage (03) et des matières solides contenues dans les supports d'arôme (12) ;
c) passer le liquide de brassage (03) à travers l'extracteur à lit flottant (09) à une vitesse d'alimentation moyenne verticale qui est inférieure à la vitesse de sédimentation moyenne verticale des matières solides contenues dans les supports d'arome (12) afin de libérer les matières aromatiques des matières solides dans le liquide de brassage (03) et afin de séparer les matières solides du support d'aromes (12) du liquide de brassage (03).

10. Procédé selon la revendication 9,
**caractérisé en ce que**
dans l'étape a), l'extracteur à lit flottant (09) est rempli des supports d'arome (12) secs et du liquide de brassage (03), le liquide de brassage (03) étant passé ensuite à travers l'extracteur à lit flottant (09) de manière circulante dans des directions d'alimentation alternantes afin de broyer les particules solides des supports d'arome, tout en formant une suspension, et afin de former un lit de suspension (18) dans l'extracteur à lit flottant (09).

11. Procédé selon la revendication 9 ou 10,
**caractérisé en ce qu'**
après avoir quitté l'extracteur à lit flottant (09), le liquide de brassage (03) est passé à travers un dispositif de filtre fin (21) afin d'éliminer des composants fins des particules solides dans le liquide de brassage (03).

12. Procédé selon l'une quelconque des revendications 9 à 11,
**caractérisé en ce que**
dans l'étape c), le liquide de brassage (03) est passé à partir d'un récipient de stockage, notamment d'une cuve de fermentation (02) pour le stockage de la bière, à travers l'extracteur à lit flottant (09) de manière circulante.

13. Procédé selon l'une quelconque des revendications 9 à 12,
**caractérisé en ce qu'**
après l'étape c), le liquide de brassage (03) est collecté dans un récipient, notamment dans une cuve de fermentation (02), et est circulé afin de compenser des différences de concentration.

14. Procédé selon l'une quelconque des revendications 9 à 13,
**caractérisé en ce qu'**
un produit de houblon, notamment des pellets de houblon, est/sont utilisé(s) comme support d'aromes (12).

15. Procédé selon l'une quelconque des revendications 9 à 14,
**caractérisé en ce qu'**
un liquide de brassage (03) alcoolisé, notamment de la bière en fermentation ou de la bière mûre, est utilisé(e).
